# EUROPEAN PATENT APPLICATION

(11) **EP 3 778 084 A1**
(43) Date of publication of application: **17.02.2021**
(21) Application number: 20797013.8
(22) Date of filing: 27.02.2020
(51) Int. Cl.: B23C 5/10

(54) **CUTTING TOOL**

(30) Priority: 13.06.2019 JP 2019110246
(71) Applicant: Sumitomo Electric Hardmetal Corp., Itami-shi, Hyogo 664-0016 (JP)
(72) Inventor: HARADA, Gaku, Itami-shi Hyogo 6640016 (JP); KAKINOKI, Soichiro, Itami-shi Hyogo 6640016 (JP); KUKINO, Satoru, Itami-shi Hyogo 6640016 (JP)
(74) Representative: Boult Wade Tennant LLP
(86) International application number: PCT/JP2020/008122
(87) International publication number: WO 2020/250499

(57) **Abstract**

A cutting tool includes: a main body portion composed of a cemented carbide; and a front end portion composed of a binderless cubic boron nitride polycrystal, the front end portion being joined to the main body portion. In an axial direction along a rotation axis of the main body portion, the main body portion has a first end and a second end opposite to the first end. The front end portion has a neck portion and an edge portion, the neck portion protruding from the second end along the axial direction, the edge portion being continuous to the neck portion, the edge portion being located at a location distant away from the second end relative to the neck portion in the axial direction. In the axial direction, the neck portion has a third end on the edge portion side and a fourth end opposite to the third end. The edge portion includes a cutting edge at an outer circumference of the edge portion. At the fourth end, a cross sectional area of the neck portion in a cross section orthogonal to the axial direction is larger than an area of a circumscribed circle of the cutting edge, the circumscribed circle centering on the rotation axis when seen in a front view from the front end portion side along the axial direction. A length of the front end portion in the axial direction is larger than a diameter of the circumscribed circle.

## Description

### TECHNICAL FIELD

The present disclosure relates to a cutting tool. The present application claims a priority based on Japanese Patent Application No. 2019-110246 filed on June 13, 2019, the entire content of which is incorporated herein by reference.

### BACKGROUND ART

PTL 1 (Japanese Patent Laying-Open No. 2018-122365) describes a ball end mill. The ball end mill described in PTL 1 has a ball edge portion and a shank. The ball edge portion has: a base end side edge portion composed of a cemented carbide; and a front side edge portion composed of a cubic boron nitride sintered material or a diamond sintered material. The shank has a main body portion, a tapered portion, and a neck portion. The shank is composed of a cemented carbide. At the base end side edge portion, the ball edge portion is fixed to the neck portion of the shank by brazing.

PTL 2 (Japanese Patent Laying-Open No. 2017-119333) describes a ball end mill. The ball end mill described in PTL 2 has an edge portion and a tool main body. The edge portion has a substantially hemispherical shape, and is composed of a boron nitride sintered material or a diamond sintered material. The tool main body is composed of a cemented carbide. The tool main body has a main body portion, a tapered portion, and a neck portion. The edge portion is fixed to the neck portion of the tool main body by brazing. The crystal grain sizes of boron nitride crystal grains (the crystal grain sizes of diamond crystal grains) in the boron nitride sintered material (the diamond sintered material) are more than 3 µm and less than or equal to 36 µm.

### CITATION LIST

### PATENT LITERATURE

PTL 1: Japanese Patent Laying-Open No. 2018-122365
PTL 2: Japanese Patent Laying-Open No. 2017-119333

### SUMMARY OF INVENTION

A cutting tool according to the present disclosure includes: a main body portion composed of a cemented carbide; and a front end portion composed of one of a binderless cubic boron nitride polycrystal, a binderless diamond polycrystal and a diamond single crystal, the front end portion being joined to the main body portion. In an axial direction along a rotation axis of the main body portion, the main body portion has a first end and a second end opposite to the first end. The front end portion has a neck portion and an edge portion, the neck portion protruding from the second end along the axial direction, the edge portion being continuous to the neck portion, the edge portion being located at a location distant away from the second end relative to the neck portion in the axial direction. In the axial direction, the neck portion has a third end on the edge portion side and a fourth end opposite to the third end. The edge portion includes a cutting edge at an outer circumference of the edge portion. At the fourth end, a cross sectional area of the neck portion in a cross section orthogonal to the axial direction is larger than an area of a circumscribed circle of the cutting edge, the circumscribed circle centering on the rotation axis when seen in a front view from the front end portion side along the axial direction. A length of the front end portion in the axial direction is larger than a diameter of the circumscribed circle.

### BRIEF DESCRIPTION OF DRAWINGS

Fig. 1 is a plan view of a cutting tool according to an embodiment.
Fig. 2 is an enlarged view in II of Fig. 1.
Fig. 3 is a front view of the cutting tool according to the embodiment.
Fig. 4 is a cross sectional view along IV-IV of Fig. 2.
Fig. 5A is a cross sectional view along VA-VA of Fig. 3.
Fig. 5B is a schematic cross sectional view of a neck portion 21 in a cross section along a rotation axis A when an outer circumferential surface 21c is constituted of a curve formed by connecting a plurality of arcs.
Fig. 6 is an enlarged plan view of a cutting tool according to a first modification of the embodiment.
Fig. 7 is a plan view of a cutting tool according to a second modification of the embodiment.
Fig. 8 is a plan view of a cutting tool according to a third modification of the embodiment.
Fig. 9 is a front view of a cutting tool according to a fourth modification of the embodiment.
Fig. 10 is a flowchart showing a method for manufacturing the cutting tool according to the embodiment.

### DETAILED DESCRIPTION

### [Problem to be solved by the Present Disclosure]

In the cutting tool described in PTL 1, each of the neck portion of the shank and the base end side edge portion is composed of a cemented carbide. Hence, deflection at each of the portions may become large. In other words, the cutting tool described in PTL 1 has room for improvement in terms of processing precision during cutting.

Also, in the ball end mill described in PTL 2, the neck portion of the tool main body is composed of a cemented carbide. Hence, there is room for improvement in terms of processing precision during cutting. Moreover, in the ball end mill described in PTL 2, joining strength between the edge portion and the tool main body is insufficient. Hence, there is room for improvement in terms of durability during cutting.

The present disclosure has been made in view of the above-described problem of the conventional art. More specifically, the present disclosure is to provide a cutting tool allowing for improved processing precision and durability during cutting.

### [Advantageous Effect of the Present Disclosure]

According to the cutting tool according to the present disclosure, processing precision and durability during cutting can be improved.

### [Description of Embodiments]

First, embodiments of the present disclosure are listed and described.
(1) A cutting tool according to one embodiment includes: a main body portion composed of a cemented carbide; and a front end portion composed of one of a binderless cubic boron nitride polycrystal, a binderless diamond polycrystal and a diamond single crystal, the front end portion being joined to the main body portion. In an axial direction along a rotation axis of the main body portion, the main body portion has a first end and a second end opposite to the first end. The front end portion has a neck portion and an edge portion, the neck portion protruding from the second end along the axial direction, the edge portion being continuous to the neck portion, the edge portion being located at a location distant away from the second end relative to the neck portion in the axial direction. In the axial direction, the neck portion has a third end on the edge portion side and a fourth end opposite to the third end. The edge portion includes a cutting edge at an outer circumference of the edge portion. At the fourth end, a cross sectional area of the neck portion in a cross section orthogonal to the axial direction is larger than an area of a circumscribed circle of the cutting edge, the circumscribed circle centering on the rotation axis when seen in a front view from the front end portion side along the axial direction. A length of the front end portion in the axial direction is larger than a diameter of the circumscribed circle.
   In the cutting tool according to (1), the neck portion is composed of the binderless cubic boron nitride polycrystal, the binderless diamond polycrystal, or the diamond single crystal. Accordingly, deflection in the vicinity of the front end of the cutting tool is decreased, with the result that processing precision during cutting can be improved. In the cutting tool according to (1), the cross sectional area of the neck portion at the second end is larger than the area of the circumscribed circle of the cutting edge centering on the rotation axis. Accordingly, durability during cutting can be improved.
(2) In the cutting tool according to (1), in a cross section along the rotation axis, an outer circumferential surface of the neck portion may be constituted of a single arc. The cross sectional area of the neck portion in the cross section orthogonal to the axial direction may have a minimum value between the third end and the fourth end. The minimum value may be 0.81 time or more and less than 1.0 time as large as the area.
   According to the cutting tool according to (2), stress concentration in the outer circumferential surface of the neck portion can be suppressed and durability in the neck portion can be maintained.
(3) In the cutting tool according to (1), in a cross section along the rotation axis, an outer circumferential surface of the neck portion may be constituted of a curve formed by connecting a plurality of arcs. The plurality of arcs have a common tangent at a boundary between the plurality of arcs. The cross sectional area of the neck portion in the cross section orthogonal to the axial direction may have a minimum value between the third end and the fourth end. The minimum value may be 0.81 time or more and less than 1.0 time as large as the area.
   According to the cutting tool according to (3), stress concentration in the outer circumferential surface of the neck portion can be suppressed and durability in the neck portion can be maintained.
(4) In the cutting tool according to (2) or (3), the cross sectional area of the neck portion in the cross section orthogonal to the axial direction may have the minimum value at a location close to the third end relative to a midpoint between the third end and the fourth end in the axial direction.
   According to the cutting tool according to (4), the second portion can be suppressed from being broken due to bending moment resulting from cutting force.
(5) In the cutting tool according to any one of (1) to (4), the diameter of the circumscribed circle of the cutting edge centering on the rotation axis when seen in the front view from the front end portion side along the axial direction may be more than or equal to 0.1 mm and less than or equal to 3.0 mm.
(6) In the cutting tool according to any one of (1) to (5), the front end portion may be composed of the binderless cubic boron nitride polycrystal. A median size of cubic boron nitride crystal grains included in the binderless cubic boron nitride polycrystal may be less than or equal to 1.0 µm.
(7) In the cutting tool according to any one of (1) to (5), the front end portion may be composed of the binderless diamond polycrystal. A median size of diamond crystal grains included in the binderless diamond polycrystal may be less than or equal to 1.0 µm.

According to the cutting tool described in each of (6) and (7), processing quality of a cut surface can be improved.

### [Details of Embodiments of the Present Disclosure]

The following describes details of an embodiment of the present disclosure with reference to figures. In the figures described below, the same or corresponding portions will be given the same reference characters and the same explanation will not be described repeatedly.

### (Configuration of Cutting Tool according to Embodiment)

The following describes a configuration of a cutting tool (hereinafter, referred to as "cutting tool 10") according to an embodiment.

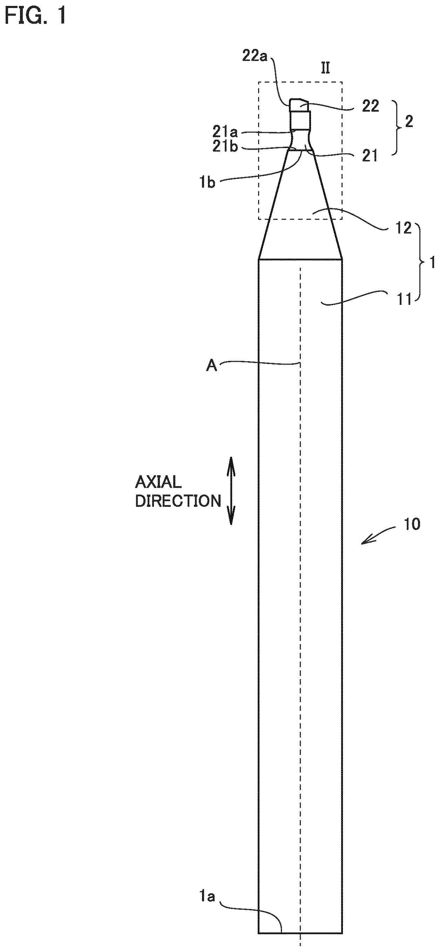

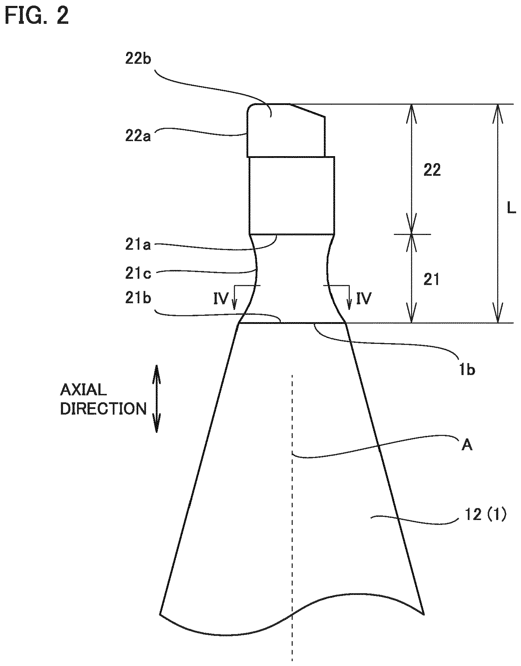

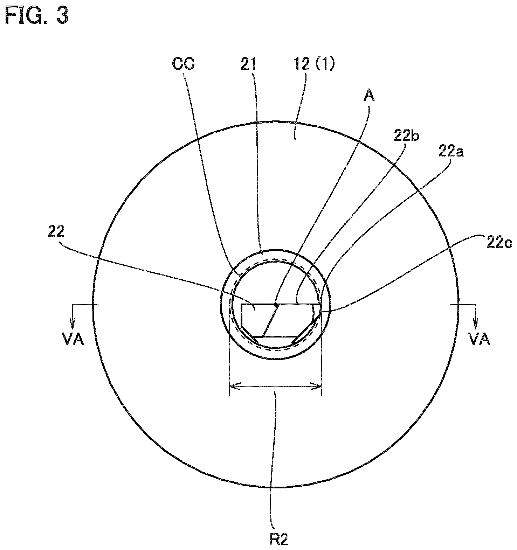

Fig. 1 is a plan view of the cutting tool according to the embodiment. Fig. 2 is an enlarged view in II of Fig. 1. Fig. 3 is a front view of the cutting tool according to the embodiment. As shown in Fig. 1 to Fig. 3, cutting tool 10 is a radius end mill.

Cutting tool 10 is a cutting tool for finish processing, for example. Cutting tool 10 is rotated around a rotation axis A to cut a workpiece. In the description below, a direction along rotation axis A is referred to as "axial direction". Cutting tool 10 has a main body portion 1 and a front end portion 2.

Main body portion 1 is composed of a cemented carbide. The cemented carbide includes hard grains and a binder. The hard grains are tungsten carbide (WC) grains, for example. Preferably, the average grain size of the hard grains is less than or equal to 1.0 µm. The average grain size of the hard grains may be less than or equal to 0.7 µm. The average grain size of the hard grains may be less than or equal to 0.5 µm. The binder is cobalt (Co), for example. The average grain size of the hard grains in the cemented carbide is represented by the average value of equivalent circle diameters of the hard grains obtained by performing image processing onto a cross sectional image of main body portion 1.

Main body portion 1 has a first end 1a and a second end 1b in the axial direction. Second end 1b is opposite to first end 1a. Main body portion 1 has a first portion 11 and a second portion 12. First portion 11 is located on the first end 1a side and second portion 12 is located on the second end 1b side. Main body portion 1 has no neck portion.

First portion 11 extends from second end 1b toward the first end 1a side. The cross sectional area of first portion 11 in a cross section orthogonal to the axial direction is constant along the axial direction. First portion 11 has a cylindrical shape, for example.

Second portion 12 extends from first portion 11 to second end 1b. As second portion 12 extends from the first portion 11 side toward the second end 1b side, the cross sectional area of second portion 12 in the cross section orthogonal to the axial direction becomes smaller. Second portion 12 has a truncated cone shape, for example.

Front end portion 2 is composed of a binderless cubic boron nitride (cBN) polycrystal. The binderless cubic boron nitride polycrystal includes a plurality of cubic boron nitride grains. In the remainder of the binderless cubic boron nitride polycrystal, a boron nitride having a crystal structure other than the cubic crystal structure such as hexagonal boron nitride (hBN) or wurtzite type boron nitride (wBN), and an inevitable impurity may be included. However, no binder is included therein. That is, in the boron nitride polycrystal, the cubic boron nitride crystal grains are directly bounded to each other without a binder.

Preferably, the median size (criterion for the number) of the cubic boron nitride crystal grains in the binderless cubic boron nitride polycrystal is less than or equal to 1.0 µm. More preferably, the median size of the cubic boron nitride crystal grains in the binderless cubic boron nitride polycrystal is less than or equal to 0.05 µm. It should be noted that the median size of the cubic boron nitride crystal grains in the binderless cubic boron nitride polycrystal is more than or equal to 0.01 µm, for example.

In accordance with a method described below, the median size of the cubic boron nitride crystal grains in the binderless cubic boron nitride polycrystal is measured. First, a SEM (Scanning Electron Microscope) image in a cross section of front end portion 2 is captured. In this case, the size of a measurement visual field is set to 12 µm × 15 µm and observation magnification is set to 10000x. Five SEM images are captured at different locations.

Second, the five SEM images are subjected to an image analysis using image processing software (Win Roof Ver.7.4.5), thereby calculating a distribution of the equivalent circle diameters of the cubic boron nitride crystal grains. Based on the distribution of the equivalent circle diameters, the median size of the cubic boron nitride crystal grains in the binderless cubic boron nitride polycrystal is calculated. Specifically, the median size of the cubic boron nitride crystal grains is calculated for each of the five captured SEM images using the image processing software. Then, the average value of the median sizes obtained from the five SEM images is calculated. This average value is regarded as the median size of the cubic boron nitride crystal grains in the binderless cubic boron nitride polycrystal.

Front end portion 2 may be composed of a binderless diamond polycrystal. The binderless diamond polycrystal includes a plurality of diamond crystal grains. In the remainder of the binderless diamond polycrystal, graphite, an inevitable impurity, and the like may be included. However, no binder is included therein. That is, in the binderless diamond polycrystal, the diamond crystal grains are directly bounded to each other without a binder. Front end portion 2 may be composed of a diamond single crystal.

In the binderless diamond polycrystal, the median size (criterion for the number) of the diamond crystal grains is preferably less than or equal to 1.0 µm. In the binderless diamond polycrystal, the median size of the diamond crystal grains is more preferably less than or equal to 0.05 µm. It should be noted that in the binderless diamond polycrystal, the median size of the diamond crystal grains is more than or equal to 0.005 µm, for example. The median size of the diamond crystal grains in the binderless diamond polycrystal is measured in the same manner as the measurement of the median size of the cubic boron nitride crystal grains in the binderless cubic boron nitride polycrystal.

Front end portion 2 is fixed to main body portion 1. Front end portion 2 has a neck portion 21 and an edge portion 22. Neck portion 21 protrudes from second end 1b of main body portion 1 along the axial direction. Edge portion 22 is continuous to neck portion 21. In the axial direction, edge portion 22 is located at a location distant away from second end 1b relative to neck portion 21.

Neck portion 21 has a third end 21a and a fourth end 21b. Third end 21a and fourth end 21b are ends of neck portion 21 in the axial direction. Third end 21a is located on the edge portion 22 side. Fourth end 21b is located opposite to third end 21a. Neck portion 21 is fixed to the end surface of main body portion 1 on the second end 1b side by brazing, for example. That is, fourth end 21b of neck portion 21 is fixed to second end 1b of main body portion 1.

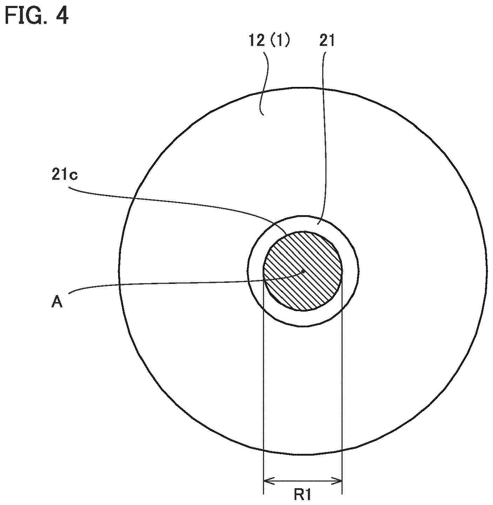

Fig. 4 is a cross sectional view along IV-IV of Fig. 2. As shown in Fig. 4, in the cross section orthogonal to the axial direction, neck portion 21 has a circular cross sectional shape, for example. It should be noted that in the cross section orthogonal to the axial direction, neck portion 21 may have a quadrangular or polygonal cross sectional shape. It is assumed that a cross sectional area S1 represents the cross sectional area of neck portion 21 in the cross section orthogonal to the axial direction of the neck portion. It is assumed that a diameter R1 represents the diameter of neck portion 21 in the cross section orthogonal to the axial direction. Diameter R1 is twice as large as a distance between outer circumferential surface 21c of neck portion 21 and rotation axis A in the cross section orthogonal to the axial direction.

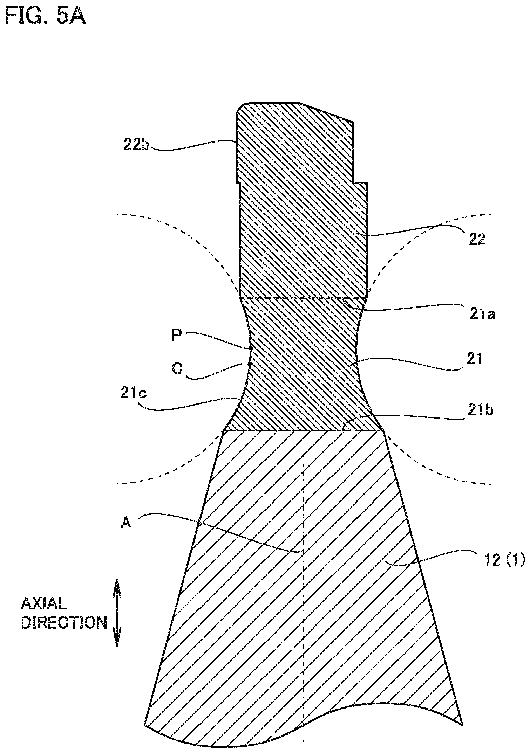

Fig. 5A is a cross sectional view along VA-VA of Fig. 3. As shown in Fig. 5A, outer circumferential surface 21c is constituted of a single arc (indicated by a dotted line in the figure) in the cross section along rotation axis A. The arc constituting outer circumferential surface 21c in the cross section along rotation axis A protrudes toward the rotation axis A side. Diameter R1 (cross sectional area S1) has the minimum value at a location P. Location P is located between third end 21a and fourth end 21b. Location P is preferably located at a location close to third end 21a relative to a midpoint C between third end 21a and fourth end 21b in the axial direction.

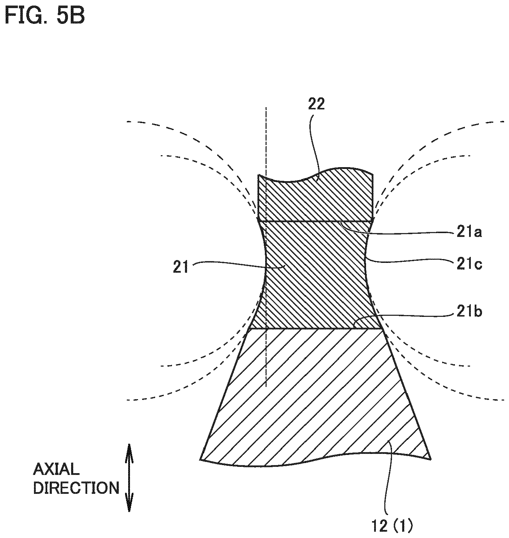

In the cross section along rotation axis A, outer circumferential surface 21c may be constituted of a curve formed by connecting a plurality of arcs. Fig. 5B is a schematic cross sectional view of neck portion 21 in the cross section along rotation axis A when outer circumferential surface 21c is constituted of the curve formed by connecting the plurality of arcs. As shown in Fig. 5B, two arcs (indicated by dotted lines in the figure) connected to each other have a common tangent (indicated by an alternate long and short dash line in the figure) at a boundary therebetween. That is, the two arcs connected to each other are smoothly connected to each other at the boundary therebetween.

As shown in Fig. 1 and Fig. 3, edge portion 22 has a cutting edge 22a, a rake face 22b, and a flank face 22c. Rake face 22b is a surface parallel to rotation axis A. Rake face 22b and flank face 22c are continuous to each other at the outer circumference of edge portion 22. Cutting edge 22a is formed on a ridgeline between rake face 22b and flank face 22c. Accordingly, a portion of the outer circumference of edge portion 22 serves as cutting edge 22a. When seen in a front view from the edge portion 22 side along the axial direction, edge portion 22 has a point-asymmetrical shape with respect to rotation axis A.

In Fig. 3, when seen in the front view from the edge portion 22 side along the axial direction, a circumscribed circle CC of cutting edge 22a centering on rotation axis A is indicated by a dotted line. It is assumed that a diameter R2 represents the diameter of circumscribed circle CC. It is assumed that an area S2 represents the area of circumscribed circle CC. Cross sectional area S1 at fourth end 21b is larger than area S2. The minimum value of cross sectional area S1 is preferably 0.81 time or more and less than 1.0 time as large as area S2. Diameter R1 at fourth end 21b is larger than diameter R2. The minimum value of diameter R1 is preferably 0.9 time or more and less than 1.0 time as large as diameter R2.

Length L of front end portion 2 in the axial direction is larger than diameter R2. Length L is 3 times or more as large as diameter R2, for example. Diameter R2 is preferably more than or equal to 0.5 mm and less than or equal to 3.0 mm.

### <First Modification>

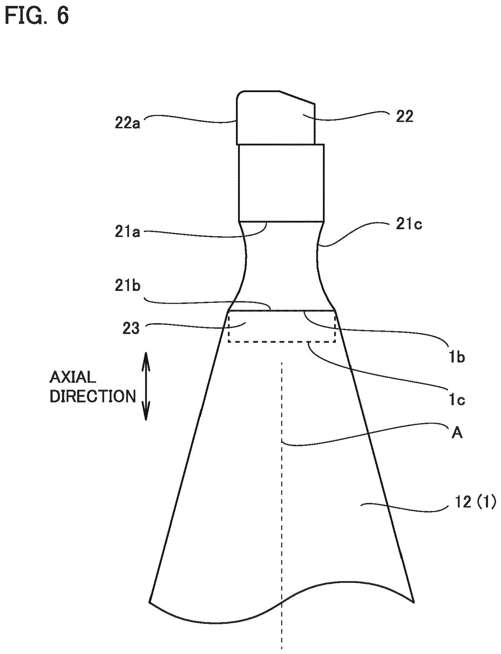

Fig. 6 is an enlarged plan view of a cutting tool according to a first modification of the embodiment. As shown in Fig. 6, front end portion 2 may further have a protrusion 23. Protrusion 23 protrudes from fourth end 21b along a direction from third end 21a toward fourth end 21b. A recess 1c is formed in the end surface of main body portion 1 (second portion 12) on the second end 1b side. At recess 1c, the end surface of main body portion 1 on the second end 1b side is depressed toward the first end 1a side. Protrusion 23 is inserted in recess 1c. In this case, front end portion 2 is fixed to main body portion 1 by brazing for protrusion 23 and recess 1c, thus increasing a joining area of the brazing.

### <Second and Third Modifications>

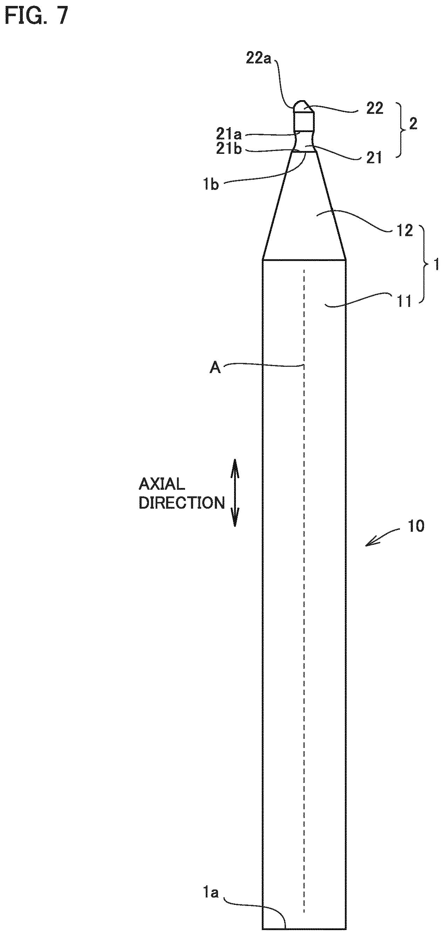

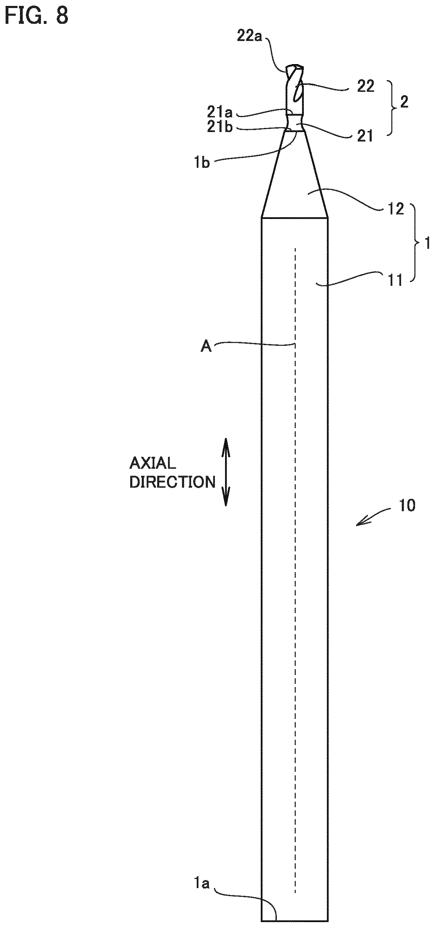

Fig. 7 is a plan view of a cutting tool according to a second modification of the embodiment. Fig. 8 is a plan view of a cutting tool according to a third modification of the embodiment. In the description above, the radius end mill has been illustrated as an exemplary cutting tool 10; however, cutting tool 10 is not limited to this. As shown in Fig. 7, cutting tool 10 may be a ball end mill. Cutting tool 10 may be a drill as shown in Fig. 8.

### <Fourth Modification>

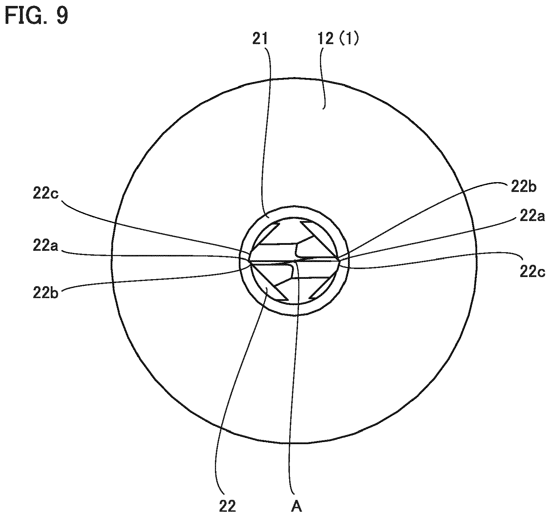

Fig. 9 is a front view of a cutting tool according to a fourth modification of the embodiment. When seen in the front view from the edge portion 22 side along the axial direction, edge portion 22 may have a point-symmetrical shape with respect to rotation axis A as shown in Fig. 9.

### (Method for Manufacturing Cutting Tool according to Embodiment)

The following describes a method for manufacturing cutting tool 10.

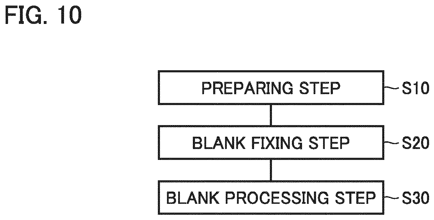

Fig. 10 is a flowchart showing the method for manufacturing the cutting tool according to the embodiment. As shown in Fig. 10, the method for manufacturing cutting tool 10 includes a preparing step S10, a blank fixing step S20, and a blank processing step S30.

In preparing step S10, main body portion 1 and a blank are prepared. This blank is composed of a binderless cubic boron nitride polycrystal, a binderless diamond polycrystal, or a diamond single crystal.

The binderless cubic boron nitride polycrystal is formed by directly converting hexagonal boron nitride to cubic boron nitride not via wurtzite type boron nitride under predetermined temperature and pressure conditions. The binderless diamond polycrystal is formed by directly converting graphite to diamond under predetermined temperature and pressure conditions. The diamond single crystal is formed by a CVD (Chemical Vapor Deposition) method, for example.

In blank fixing step S20, the blank composed of the binderless cubic boron nitride polycrystal, the binderless diamond polycrystal, or the diamond single crystal is fixed to the second end 1b side of main body portion 1. This fixation is performed by brazing, for example.

In blank processing step S30, the blank is processed to form front end portion 2 (neck portion 21 and edge portion 22). The blank is processed by way of polishing with a grinding stone, electric discharge processing, laser processing, or the like, for example. In this way, cutting tool 10 is prepared.

### (Effect of Cutting Tool according to Embodiment)

The following describes an effect of cutting tool 10.

In cutting tool 10, neck portion 21 is composed of the binderless cubic boron nitride polycrystal, the binderless diamond polycrystal, or the diamond single crystal. Since no binder is included in the binderless cubic boron nitride polycrystal, the binderless diamond polycrystal, and the diamond single crystal, each of the binderless cubic boron nitride polycrystal, the binderless diamond polycrystal, and the diamond single crystal has a higher Young's modulus than the Young's modulus of a cemented carbide as well as the Young's modulus of each of a cubic boron nitride sintered material and a diamond sintered material each including a binder. Hence, according to cutting tool 10, rigidity in neck portion 21 is improved, with the result that cutting precision can be improved.

In the case where front end portion 2 has a point-asymmetrical shape with respect to rotation axis A when seen in the front view from the front end portion 2 side along the axial direction, vibrations may be generated due to non-uniform centrifugal force resulting from rotation around rotation axis A. As described above, the rigidity of neck portion 21 is improved in cutting tool 10. Hence, even in the case where front end portion 2 has a point-asymmetrical shape with respect to rotation axis A when seen in the front view from the front end portion 2 side along the axial direction, the above-described vibrations can be suppressed.

In cutting tool 10, cross sectional area S1 at fourth end 21b is larger than area S2. Hence, according to cutting tool 10, joining strength between front end portion 2 (neck portion 21) and main body portion 1 is secured, with the result that durability during cutting can be improved.

When outer circumferential surface 21c is constituted of one arc (is constituted of two or more arcs having a common tangent at a boundary therebetween) in the cross section along rotation axis A, outer circumferential surface 21c is constituted of a smooth surface, with the result that stress concentration in outer circumferential surface 21c can be suppressed. When the minimum value of cross sectional area S1 is 0.81 time or more and less than 1.0 time as large as area S2 (when the minimum value of diameter R1 is 0.9 time or more and less than 1.0 time as large as diameter R2), durability of neck portion 21 can be secured even if neck portion 21 has a constricted region.

Bending moment resulting from cutting force acting on cutting edge 22a becomes larger as it is further away from cutting edge 22a. Hence, when neck portion 21 has a constricted region, as the constricted region is further away from cutting edge 22a, breakage is more likely to occur at the constricted region due to the above-described bending moment. However, when location P is located at the location close to third end 21a relative to midpoint C, a distance between the constricted region and cutting edge 22a becomes relatively small, thereby suppressing the breakage due to the bending moment.

Processing quality of a cut surface depends on the sizes of crystal grains in a material of a cutting edge. Therefore, the processing quality of the cut surface can be improved (specifically, the surface roughness of the cut surface can be small) when each of the median size of the cubic boron nitride crystal grains in the binderless cubic boron nitride polycrystal and the median size of the diamond crystal grains in the binderless diamond polycrystal is less than or equal to 1 µm.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

1: main body portion; 1a: first end; 1b: second end; 1c: recess; 10: cutting tool; 11: first portion; 12: second portion; 2: front end portion; 21: neck portion; 21a: third end; 21b: fourth end; 21c: outer circumferential surface; 22: edge portion; 22a: cutting edge; 22b: rake face; 22c: flank face; 23: protrusion; A: rotation axis; C: midpoint; CC: circumscribed circle; L: length; P: location; R1, R2: diameter; S1: cross sectional area; S2: area; S10: preparing step; S20: blank fixing step; S30: blank processing step.

## Claims

1. A cutting tool comprising:
a main body portion composed of a cemented carbide; and
a front end portion composed of one of a binderless cubic boron nitride polycrystal, a binderless diamond polycrystal and a diamond single crystal, the front end portion being joined to the main body portion, wherein
in an axial direction along a rotation axis of the main body portion, the main body portion has a first end and a second end opposite to the first end,
the front end portion has a neck portion and an edge portion, the neck portion protruding from the second end along the axial direction, the edge portion being continuous to the neck portion, the edge portion being located at a location distant away from the second end relative to the neck portion in the axial direction,
in the axial direction, the neck portion has a third end on the edge portion side and a fourth end opposite to the third end,
the edge portion includes a cutting edge at an outer circumference of the edge portion,
at the fourth end, a cross sectional area of the neck portion in a cross section orthogonal to the axial direction is larger than an area of a circumscribed circle of the cutting edge, the circumscribed circle centering on the rotation axis when seen in a front view from the front end portion side along the axial direction, and
a length of the front end portion in the axial direction is larger than a diameter of the circumscribed circle.

2. The cutting tool according to claim 1, wherein
in a cross section along the rotation axis, an outer circumferential surface of the neck portion is constituted of a single arc,
the cross sectional area has a minimum value between the third end and the fourth end, and
the minimum value is 0.81 time or more and less than 1.0 time as large as the area.

3. The cutting tool according to claim 1, wherein
in a cross section along the rotation axis, an outer circumferential surface of the neck portion is constituted of a curve formed by connecting a plurality of arcs,
the plurality of arcs have a common tangent at a boundary between the plurality of arcs,
the cross sectional area has a minimum value between the third end and the fourth end, and
the minimum value is 0.81 time or more and less than 1.0 time as large as the area.

4. The cutting tool according to claim 2 or claim 3, wherein the cross sectional area has the minimum value at a location close to the third end relative to a midpoint between the third end and the fourth end in the axial direction.

5. The cutting tool according to any one of claim 1 to claim 4, wherein the diameter is more than or equal to 0.1 mm and less than or equal to 3.0 mm.

6. The cutting tool according to any one of claim 1 to claim 5, wherein
the front end portion is composed of the binderless cubic boron nitride polycrystal, and
a median size of cubic boron nitride crystal grains included in the binderless cubic boron nitride polycrystal is less than or equal to 1.0 µm.

7. The cutting tool according to any one of claim 1 to claim 5, wherein
the front end portion is composed of the binderless diamond polycrystal, and
a median size of diamond crystal grains included in the binderless diamond polycrystal is less than or equal to 1.0 µm.
